# EUROPEAN PATENT APPLICATION

(11) **EP 1 351 159 A2**
(43) Date of publication of application: **08.10.2003**
(21) Application number: 02354025.5
(22) Date of filing: 08.02.2002
(51) Int. Cl.: G06F 17/28, G06F 17/21

(54) **Improvements relating to the content of the electronic documents**

(71) Applicant: Hewlett Packard Company, a Delaware Corporation, Palo Alto, CA 94304 (US)
(72) Inventor: Lecarpentier, Francois-Xavier, 38360 Sassenage (FR)
(74) Representative: Lloyd, Richard Graham (GB)

(57) **Abstract**

A method of adapting the content of an electronic document, comprising:
a) identifying a data type that may be expressed in a plurality of formats;
b) analysing the document to find data of the identified type and
c) changing the format of the data to a reader-preferred format so that the adapted content may be displayed to the reader.

## Description

### Description of and Background to the Invention

This invention relates to the general field of electronic documents and relates, in particular, to the adaptation of the content of electronic documents such as electronic publications, spreadsheets, database records and web pages.

### Summary of the Prior Art

Understandably, most electronic documents that are made available on-line contain information in formats that are specific to the writer of the document concerned. On the one hand, where the natural language of the document is alien to a prospective reader, a number of utilities (some on-line) can be used to translate the source document into a more understandable natural language. Thus, it is possible to translate an electronic document written in French, into English, on a "word-to-word" basis. On the other hand, however, natural language translations do nothing to assist a reader of a "culturally" alien document such as a technical specification in which the mass, temperature and volume data is given in an alien format. As will be appreciated, this is in fact a rather common occurrence, bearing in mind, for example, that imperial measurements are still in widespread use in the United Kingdom and the United States, whereas such measurements are largely meaningless to mainland Europeans. A number of unit conversion utilities do of course exist (see, for example, the tools available at www.convert-me.com), but these are, in effect, little more than calculators, and it is necessary, using such utilities, to input the "alien" values one-by-one, meaning that this approach is far from ideal where large documents are involved.

In addition, a number of computer operating systems allow certain numeric values (e.g. dates and times) to be displayed in a particular way, as specified by a user, but no facilities or systems currently exist whereby unstructured (e.g. text-based) electronic documents can be conveyed to a reader in a culturally familiar and meaningful format.

With that in mind, it is an object of the present invention to provide an improved method of adapting the content of an electronic document that overcomes or at least reduces these and other drawbacks.

### Summary of the Invention

In accordance with a first aspect of the present invention, there is provided a method of adapting the content of an electronic document, comprising:
a) identifying a data type that may be expressed in a plurality of formats;
b) analysing the document to find data of the identified type and
c) changing the format of the data to a reader-preferred format so that the adapted content may be displayed to the reader.

By "data type" it should be understood that this term is intended to refer to a category of data, rather than to any specific values of the category concerned. Thus, for example, the data type "Temperature" would encompass elements such as "15°C", "112 degrees Fahrenheit" and "five ° Kelvin". Similarly, the term "format" is intended in this specification to refer to the arrangement, configuration, presentation or manner of display of the document content rather than the natural language (e.g. English, French or German) in which the content is written.

It will therefore be understood that the invention, in contrast to on-line translators, for example, allows document content to be adapted where the original format of a particular data type is alien or unclear to the reader concerned, even where the document is written in a familiar natural language.

In accordance with the invention, the adapted content may be displayed with the unadapted content of the electronic document. Thus, both formats of the data may be displayed to the reader, whereby the reader is able to determine which aspects of the document content have been adapted.

Alternatively, the adapted content may be displayed to the reader on request. In this way, the document may be displayed to the reader "untouched" with the adapted content only being conveyed to the reader when the reader so requests.

To that end, the unadapted data, when displayed, may be marked or otherwise highlighted to indicate to the reader that it may also be displayed in an adapted format.

Similarly, the method may include a toggle facility whereby the reader may toggle between the unadapted and adapted contents.

The toggle may be effected by clicking or otherwise selecting the unadapted source content, but conveniently is effected using a mouse roll-over function.

As a still further alternative, the adapted content may be displayed instead of the original content. A toggle facility may similarly be provided to effect this, thus allowing the reader to display the whole original document or to display selected parts of the original document by use of a mouse roll-over function, for example.

As a still further alternative, the adapted content may be displayed within the unadapted, original, document, with the modified content being marked or otherwise highlighted to identify it as such.

Insofar as the analysis step is concerned, it will of course be understood that it may not be necessary for the entire document to be analysed in the manner described. Thus, for example, the header, title and embedded font characteristics may not be made the subject of any analysis, as these areas are unlikely to contain any data of the identified type.

However, whether or not the entire document is subjected to an analysis step, the document may be analysed by searching for occurrences of the identified data. The searching may be semantic, in that relevant word, symbol or character patterns are searched, and the search utility or engine may thus be pre-configured to identify data values falling within the scope of the data type adopted. For example, where the data type adopted is "Imperial Length", the semantic search engine would be operative to locate (on a case-insensitive basis) occurrences of "foot", "feet", "inch", "inches" "yard", "yards", "mile", "miles" and the like whereas an "Imperial Mass" data type search would locate occurrences of "ounce", "oz", "pound", "lb", "stone" and the like.

In a preferred embodiment, the document may be analysed by searching for occurrences of the identified data-type where the data-type is present in conjunction with an associated numeric value. In this way, occurrences, for example, of "21 feet", "fifty nine yards" and "10½ miles" would be located, whereas the words "feet", "inches" and "yards", in isolation, would not. As will be understood, this would avoid unhelpful semantic format changes where no meaningful numeric values are present.

Preferably, however, the document is analysed by searching for tags or markers indicative of the presence of the identified data. Thus, appropriate tags inserted in the document by the author may relate to a plurality of data types and thus may indicate the presence of the identified data concerned.

In this way, an "Imperial Temperature" tag, located in the document just before the phrase "59 Degrees Fahrenheit" would indicate that the following phrase fell within the "Imperial Temperature" data type category, thus enabling an appropriate conversion to be effected prior to the adapted content being displayed or otherwise conveyed to the reader. In addition to such a "start" tag, an appropriate "end" tag may be used to de-mark the end of the data type concerned.

It will therefore be understood that the invention lends itself particularly well, although by no means exclusively, to the use of web-based markup languages such as HTML and XML and that the invention is therefore particularly well-suited to use with web documents and the internet, with HTML, XML or other such markup language tags thus being used to indicate the presence of the identified data.

Similarly, HTML "language" tags can be used to identify the natural language in which the original document was written. As will be appreciated, knowledge of the natural language of the document can be of assistance during the analysis step by ensuring that appropriate semantic matches are used. However, if the web document does not contain HTML language tags, or if the document is not web-based at all, an automated language identification mechanism may be used in order to determine the natural language of the document. Such mechanisms are well-known in the art (see for example US patent nos. 5,548,507, 6,216,102 and 5,062,143) and will not therefore be expanded upon herein.

In a preferred embodiment of the present invention, the adapted document content is expressed in the same natural language as the original, unadapted content.

In accordance with a second aspect of the present invention, there is provided a system operative to adapt the content of an electronic document based on a reader's cultural identity, comprising:
a) a data type identifying element,
b) a document analyser operative to locate data of the identified type, and
c) a content modifier operative to modify the format of the data to a reader-preferred format, whereby the modified content may be displayed to the reader.

The data type identifying element may be operatively associated with a reader-preferences database, the analyser may comprise a search engine operative to identify occurrences of the identified data and/or to locate document tags, and the content modifier may be operatively associated with the reader-preferences database.

The invention, in its second aspect, may comprise one or more of the features set out in relation to the first aspect of the present invention.

In accordance with a third aspect of the present invention, there is provided a system operative to adapt the content of a web document based on a reader's cultural identity, comprising:
a) a data type identifying element,
b) a document analyser operative to locate data of the identified type by locating content markup tags embedded within the document, and
c) a content modifier operative to modify the format of the data to a reader-preferred format, whereby the modified content may be displayed to the reader.

The invention, in its third aspect, may comprise one or more of the features described in relation to the first and second aspects of the invention.

### Brief Description of the Drawings

The invention will now be described in greater detail, but strictly by way of example only, by reference to the accompanying drawings, of which;
FIGURE 1 is a schematic illustration of the various possible steps in one embodiment of the invention;
FIGURE 2 is a block diagram illustrating possible hardware and software implementations of the invention;
FIGURE 3A is an example of a source (unadapted) document, available in electronic form;
FIGURE 3B shows a parsed (analysed) version of the document;
   and
FIGURE 3C shows how the document may look subsequent to a content adaptation step.

### Detailed Description of the Drawings

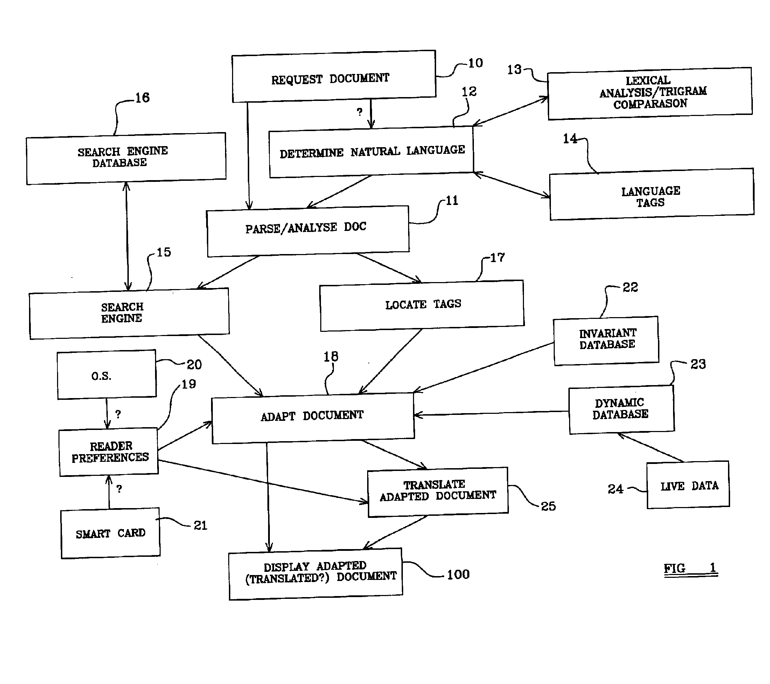

Referring first to Figure 1, this shows, in schematic form, the various steps involved in implementing one embodiment of the present invention, from an initial document request 10 to the display 100 of an adapted version of the document's content.

The document request 10 may be effected locally, in that a PC, or the like, calls up an electronically stored document from memory, or may be performed remotely, such as where a browser application requests an HTML web page by despatching a HTTP request to an appropriate server.

Once the source document is received by the requesting client/application, a parsing analysis step 11 is carried out in order to determine the nature and content of the document concerned. If required/selected by a reader, the natural language (e.g. English, French or German) of the requested document may be determined using an intermediate language determination step 12. Language determination of this type can be carried out using lexical analysis or trigram comparison techniques 13 such as are described in US patents 5,548,507, 6,216,102 and 5,062,143. In brief, lexical analysis of this type involves a comparison of selected elements of the document concerned with "control" lists of well-known and common words from a number of predetermined languages, with a match between the selected elements and a particular control set allowing the natural language of the document to be determined.

Alternatively, where the source document is provided with language tags, these may be detected by an appropriate application running on the reader's PC or client apparatus. Where the source document is a web page written in HTML, HTML language tags (e.g. <meta http-equiv= "Content-Language" content = "en-gb">) which, in known fashion, allow a browser application automatically to identify the natural language of the HTML document (in the example used, British English).

The parsing analysis step 11 may be effected using a semantic/lexical approach, by employing an appropriate search engine 15, in conjunction with a search engine database 16, which is able to analyse the textual content of the document and highlight any occurrences of the data type selected by the user. The data type - in effect a "data category" - typically is of the kind which is expressed in different formats in accordance with a reader's culture, nationality, age and perhaps status, as exemplified by the following (strictly non-exhaustive) list: units of length, mass, area, temperature and volume, clothing sizes, shoe sizes, data representations, numerical values and currencies. As will be appreciated, each of these data types can be expressed differently: thus, using imperial measurements, the terms feet, inches and yards are common, but these terms may be meaningless to a mainland European, and a document containing such terms may therefore be of little value to such a person. Similarly, a European web page giving temperatures in °C may be of little value to an American internet user, with similar problems arising, for example, with clothing and shoe sizes appearing on internet commerce sites and price lists being featured on web pages and in electronic catalogues, for example.

In order for the search engine 15 to analyse the source document correctly, the search engine database should contain thorough listings of the various terms and formats relating to each such data type. Thus, where the source document is parsed to identify any imperial temperature values, the search engine 15, taking data from the search engine database 16, would be operative to identify any occurrences in the source document of the terms "Fahrenheit", "degrees Fahrenheit", "degrees F", "°F", and "° Fahrenheit".

As an alternative, document content tags may be used in a data type location step 17, whereby tags (markers) embedded within the document identify particular data types contained therein. As will be appreciated, these tags provide a ready means to identify appropriate data types within the content of the document.

It will be appreciated that, as a preliminary step, the nature of the document may first need to be identified (e.g. Word document, Ascii text document, Web page etc.), but contemporary operating systems and web browsers, for example, are provided with a number of utilities whereby such an identification step can be performed without difficulty. For example, the extensions (.doc, .txt) could be used, as could MIME headers.

A number of "data type" tags are envisaged by the applicants. Using HTML or XML, appropriate examples may be <data type = "Temperature (Imperial)" >, <data type = "US Clothing Size">,<data type = "Metric Length"> and <data type = "US Dollar Currency">. In a manner analogous to HTML/XML wording, the end of a particular data type field may be demarked by an appropriate "stop" tag such as </data type>.

Subsequent to the semantic/lexical search or tag location steps 15/17, the thus analysed-document is subjected to an adaptation step 18 in which the format of the identified data is changed in accordance with reader preferences 19. The preferences 19 may, in one embodiment, be taken from a "user settings" part of the Operating System 20 of the reader's PC or, alternatively, may be elicited from a smart card 21 or other such personalisation device. Where no "user settings" have actively been selected, default values may be taken from the operating system 20.

The preferences 19 set out the preferred formats of a number of data types, with the adaptation 18 thus involving a comparison of the identified data with the preferences and a subsequent replacement/conversion step in which the data format is changed in accordance with the preferences 19. To effect this, invariant and dynamic databases 22 and 23 may be used. The invariant database 22 contains, for example, static equivalents such as American and European shoe size tables, Fahrenheit/Celsius temperature conversion tables, imperial/metric mass conversion tables and a number of differing date and time formats, for example. On the other hand, the dynamic database 23 contains fluctuating values such as may be contained within currency conversion tables and the like, with the dynamic database 23 being fed live data from a suitable supply 24.

With the format of the identified data types thus having been changed in accordance with the reader preferences 19, the adapted document content is ready for display, as shown at step 100. However, if the adapted document is to be displayed in a natural language differing from the natural language of the source document, an intermediate translation step 25 may be effected whereby some or all of the text of the adapted document is translated into a different natural language, again in accordance with the reader preferences 19. In order to effect this translation, the adapted electronic document may be sent to an on-line translation resource such as one of the many web-based automated translation services that are currently in existence.

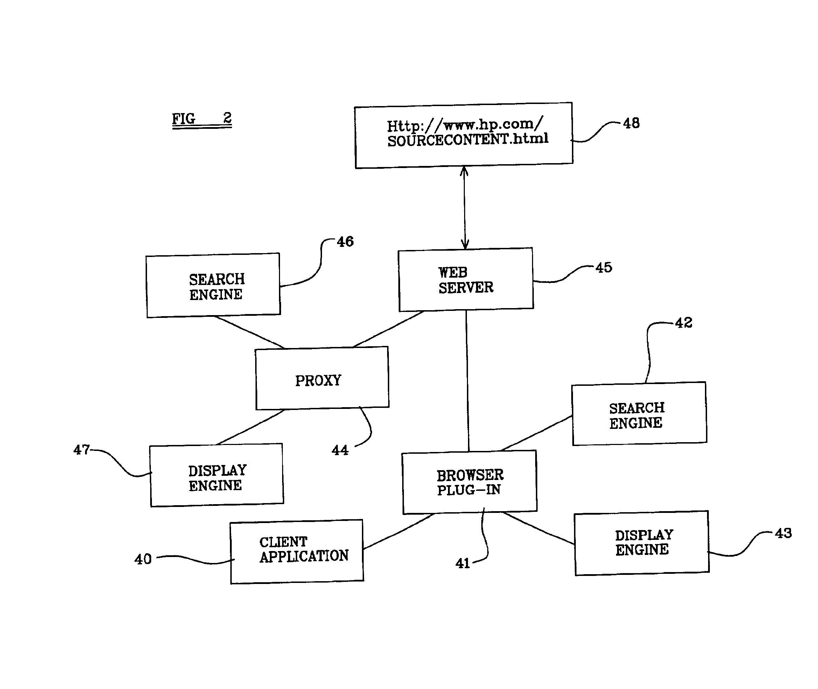

Figure 2 shows, in block diagram form, how appropriate hardware and software could be arranged in order to implement the various steps set out in Figure 1.

From a software viewpoint, a client application (e.g. web browser) 40 may be provided with an appropriate plug-in 41 which is operative, in conjunction with an associated search engine 42 (which may itself be contained within the browser), and a display engine 43 (also possibly contained within the browser), to carry out the document request step 10, the parsing/analysis step 11 and the document adaptation step 18 described in Figure 1. This means that no additional hardware is required in order for the reader to be able to benefit from the invention concerned. Such a "local" approach is likely to be particularly well-suited to the adaptation of non-web documents (such as local word processed publications) although it is likely that a hardware solution will be more appropriate where heavy web use is envisaged. In a particularly preferred embodiment, the plug-in 41 is operative in conjunction with the parsing operation carried out by the browser 40 to analyse and adapt the HTML content prior to forwarding the adapted content to the display engine 43, which may itself be unaffected by the plug-in 41. Whichever software approach is used, it will be understood that they allow relatively sophisticated tags (e.g. DHTML and Javascript tags) to be inserted into the HTML document to allow pop-up text with roll-over capabilities to be generated, for example. From a hardware perspective, a proxy server 44 may be provided between the client application 40 and a principal web server 45, with the proxy server being effective to carry out instructions received from associated search and display engines 46 and 47.

Whichever approach is adopted, the result is that the document content (such as may be obtained, for example, from a URL 48) is adapted in accordance with the reader's preferences prior to it being displayed by the reader's browser or viewing application.

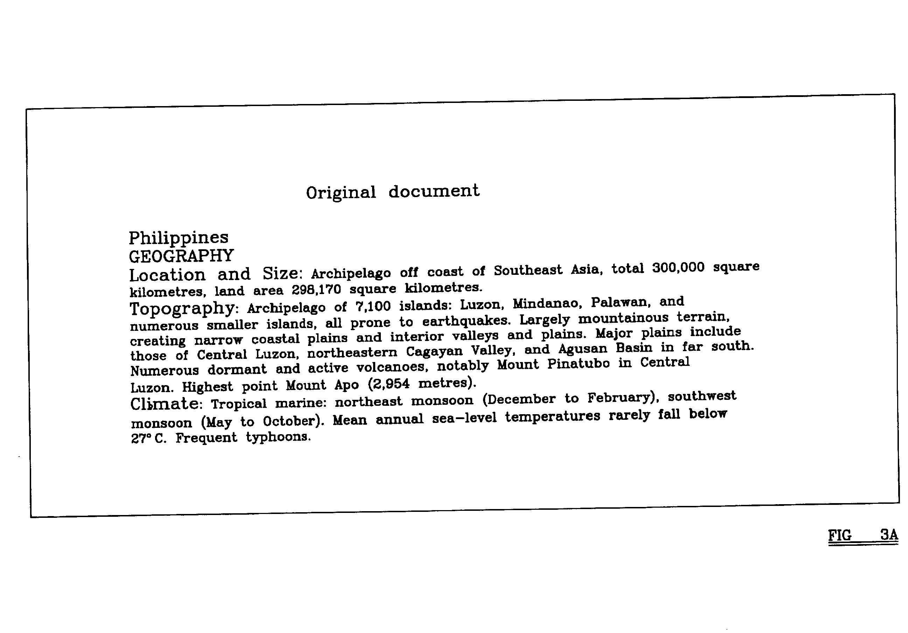

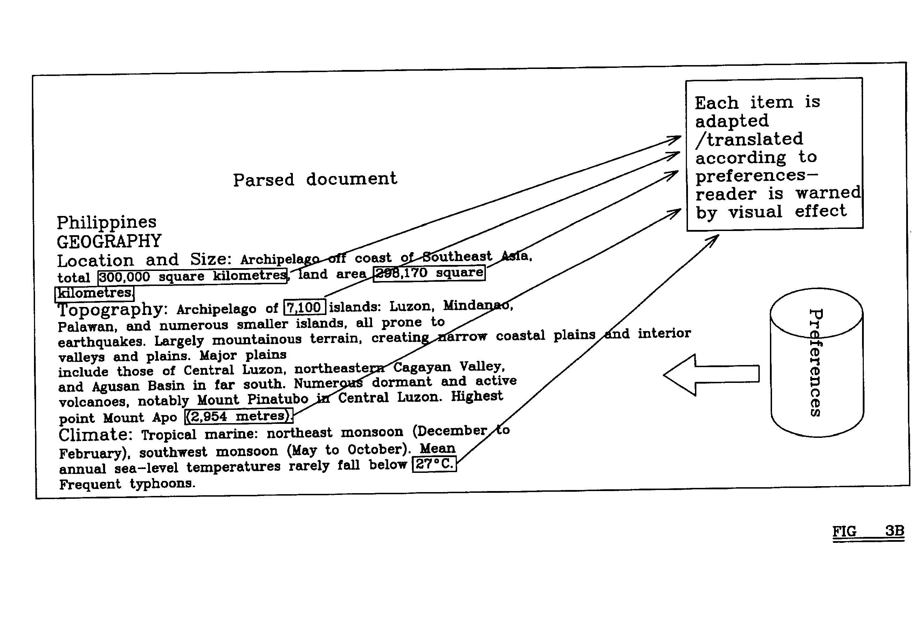

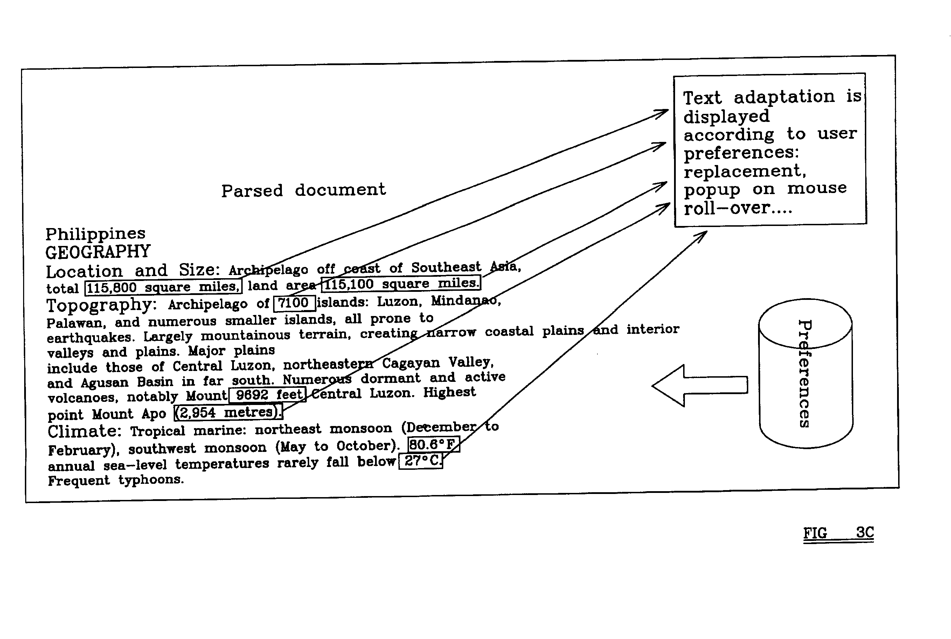

The user benefits are shown in more detail by Figures 3A, 3B and 3C. Figure 3A is a representation of an original source document, which may have been obtained by file transfer, e-mail or from an appropriate Website. As can be seen, the document contains a number of metric values (300,000 square kilometres, 298,170 square kilometres, 2,954 metres and 27°C).

Subjecting the source document to a parsing/analysis step (see Figure 1) identifies, in accordance with a reader's personal requirements, those textual elements of the document content whose format could be presented differently. As shown in Figure 2B, the metric values mentioned above - together with the number 7,100- are highlighted in the document using a box surround, indicating to the reader that the values could be displayed using alternative formats. As an alternative to the box surrounds, coloured text could be used, as could underlining, font changes, blinking text and the like.

Figure 3C illustrates how the reader's preferences can influence how the adapted content is in fact displayed. On the one hand, a textual replacement can be effected, whereby the terms "300,000 square kilometres" and "298,170 square kilometres" are simply replaced with "115,800 square miles" and "115,100 square miles" whereas the numerical value "7,100" is shown simply as "7100".

In order to provide a degree of flexibility however, a Java Script mouse "roll-over" function may alternatively be used whereby the adapted/converted values or formats are displayed in a pop-up box only when the reader's mouse pointer or cursor is positioned over the unadapted data. Thus, when the mouse pointer is positioned over the "2,954 metres" text, the Java Script function generates a pop-up box above and to the side of the text, with the box containing the adapted content - "9692 feet".

In the same way, the Imperial equivalents of "27°C" ("80.6°F") is displayed when the reader's mouse pointer is positioned over the "27°C" text.

In a still further alternative, unadapted and adapted content screens may be displayed side by side. As will be understood, this could be effected using two adjacent windows.

As will be understood from the foregoing description, the invention provides a mechanism whereby unfamiliar or unhelpful document content may be adapted to suit a reader's personal preferences, by identifying relevant aspects of a source document and effecting an appropriate adaptation/conversion step prior to the document being returned to the user for display. From a technical implementation view point, it may be that the semantic/lexical search approach will be favoured, although, with a range of appropriate document tags accepted on an industry-wide basis, the tagged document approach may in fact operate more efficiently and with less opportunities for error.

In the present specification "comprises" means "includes or consists of" and "comprising" means "including or consisting of".

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A method of adapting the content of an electronic document, comprising:
a) identifying a data type that may be expressed in a plurality of formats;
b) analysing the document to find data of the identified type and
c) changing the format of the data to a reader-preferred format so that the adapted content may be displayed to the reader.

2. A method according to Claim 1 wherein the adapted content is displayed with the unadapted content.

3. A method according to Claim 1 wherein the adapted content is displayed to the reader on request.

4. A method according to Claim 1, 2 or 3 wherein the unadapted data, when displayed, is marked or otherwise highlighted to indicate to the reader that it may also be displayed in an adapted format.

5. A method according to any one of the preceding claims further comprising a toggle facility whereby a reader may toggle between the unadapted and adapted contents.

6. A method according to Claim 5 wherein the toggle is effected using a mouse roll-over function.

7. A method according to any one of the preceding claims wherein the document is analysed by searching for occurrences of the identified data.

8. A method according to any one of Claims 1 to 6 wherein the document is analysed by searching for tags indicative of the presence of the identified data.

9. A method according to any one of the preceding claims wherein the electronic document is a web page and wherein the analysis is performed using HTML, XML or other such markup language tags.

10. A method according to anyone of the preceding claims wherein the adapted content is expressed in the same natural language as the unadapted content.

11. A system operative to adapt the content of an electronic document based on a reader's cultural identity, comprising:
a) a data type identifying element,
b) a document analyser operative to locate data of the identified type, and
c) a content modifier operative to modify the format of the data to a reader-preferred format, whereby the modified content may be displayed to the reader.

12. A system according to Claim 11 wherein the data type identifying element is operatively associated with a reader-preferences database, the analyser comprises a search engine operative to identify occurrences of the identified data and/or to locate document tags, the content modifier also being operatively associated with the reader-preferences database.

13. A system operative to adapt the content of a web document based on a reader's cultural identity, comprising:
a) a data type identifying element,
b) a document analyser operative to locate data of the identified type by locating content markup tags embedded within the document, and
c) a content modifier operative to modify the format of the data to a reader-preferred format, whereby the modified content may be displayed to the reader.
